# EUROPEAN PATENT SPECIFICATION

(11) **EP 0 540 102 B1**
(45) Date of publication and mention of the grant of the patent: **23.07.1997**
(21) Application number: 92203267.7
(22) Date of filing: 23.10.1992
(51) Int. Cl.: H04N 5/21

(54) **Arrangement for reducing artifacts in video signals**
Anordnung zur Reduktion der Störungen in Videosignalen
Dispositif de réduction de défauts dans les signaux vidéo

(30) Priority: 31.10.1991 US 785678; 24.03.1992 EP 92200839
(43) Date of publication of application: 05.05.1993
(73) Proprietor: Philips Electronics N.V., 5621 BA Eindhoven (NL)
(72) Inventor: Darby, Red Alan, NL-5656 AA Eindhoven (NL); Koppelmans, Johannes Franciscus Aloysius, NL-5656 AA Eindhoven (NL); Menting, Johannes Marius, NL-5656 AA Eindhoven (NL); De Haan, Gerard, NL-5656 AA Eindhoven (NL)
(74) Representative: Steenbeek, Leonardus Johannes

(56) References cited:
- EP-A- 347 325
- US-A- 4 954 894
- NTZ ARCHIV vol. 11, no. 4, August 1989, BERLIN DE pages 191 - 196 D.ZIER 'RAUSCHREDUKTION IN EINEM DIGITALEN HDTV-SYSTEM'
- D1 ( HDTV and today's broadcasting world); D2 ( HDTV real-time image compression using dual transmission channels).

## Description

The present invention relates to an arrangement for reducing artifacts in video signals.

The problem of reducing the visibility of noise in television displays has been addressed for many years. Various noise reducing circuits are known. A basic approach to solving the noise visibility problem in video displays includes storing a television field or frame, comparing the present or incoming pixel values to the corresponding stored pixel values and adding the two signals together in a ratio determined by the result of the comparison. In the case of high differences between the present and stored values, which is indicative of motion, only the present value is used. As the difference decreases, an increasing percentage of the stored value is used.

The best resolution is achieved using recursive noise reduction in which a frame of the video signal is stored and compared pixel-by-pixel with the present video signal. However, any motion occurring in the video signal results in smearing and, as such, in a video signal having moderate amounts of motion, there is no recursive noise reduction. While field recursive noise reduction has substantially less sensitivity to motion as compared to frame recursive noise reduction, resolution of the video signal is compromised in the case of still or slow moving scenes in the video signal.

US-A-4,058,836 discloses a noise reduction arrangement in which an input television signal is applied to a delay device. The delayed television signal is combined with the input television signal to reduce noise. The delay device may provide a delay time of either one field period or one frame period as is convenient.

US-A-4,390,894 discloses that if a field delay is used, in order to avoid traveling noise patterns, the delay time of the field delay should alternate between a field period plus half a line period and a field period minus half a line period. This noise reduction arrangement appears to show the following disadvantages. Switching between these two near field delay periods appears to result in a decrease of the vertical resolution. If the combination of the delayed television signal and the input television signal depends on a control signal which is obtained from a motion detector which compares the field delayed television signal and the input television signal, the interlace of two successive fields together constituting a frame may cause motion detection errors. These two problems may lead to the use of a frame delay rather than a field delay, but on the occurrence of motion, the frame delayed television signal cannot reliably be used to reduce noise in the input television signal.

The publication "HDTV and Today's Broadcasting World", 23rd Annual SMPTE Television Conference, February 3-4, 1989, pp. 312-360, discloses a family of MUSE television transmission systems. In one embodiment, a noise reducer is present which comprises a recursive filter using a frame memory in its recursion loop. A motion detection signal controls the mixing ratio between a new input signal and a frame-delayed signal.

The publication "HDTV real-time image compression using dual-transmission channels", GLOBECOM '90 IEEE Global Telecommunications Conference, December 2-5, 1990, pp. 982-986, discloses a conventional TV with improved SNR, obtained by feeding the output signal of a conventional decoder into an integrating frame store controlled by a motion flag extractor which also receives the output signal of the conventional decoder.

It is a first object of the invention to provide a television signal artifacts reduction arrangement which operates satisfactory under all circumstances.

It is another object of the present invention to provide an arrangement which exhibits the benefits of both field and frame recursive noise reduction while suppressing the detriments thereof.

Therefore, a first aspect of the invention provides an arrangement for reducing artifacts in television signals as set out in claim 1. Advantageous embodiments of the invention are set out in the subclaims.

A principal aspect of the invention is based on the recognition that if no motion is present, it is preferred to combine the frame delayed television signal and the input television signal, while if a certain extent of motion is present, the field delayed television signal can be used more reliably.

In a very advantageous embodiment of the invention, the artifacts reduction arrangement of the present invention is used to reduce artifacts in enhanced television signals which already contain motion information to control the decoding operations in an enhanced receiver. The European HD-MAC television signal is one example of such an enhanced television signal. In this respect it is to be noted that the article Bewegungsdetektionssystem für Fernsehen, which appeared in Neues aus der Technik, Vol. 1982, 15th October 1982, No. 5, already discloses an enhanced television system in which motion information signals are transmitted with the television signals for use in an enhanced television receiver. This article discloses, however, nothing about the purpose for which the motion information signals are used and it contains no suggestion that the motion information signals can be used both for decoding operations and for artifacts reduction operations.

In accordance with a further aspect of the invention, the motion information signals encoded with an enhanced television signal are used in a normal definition decoder to reduce encoding artifacts and/or noise.

These and other aspects of the invention will be apparent from and elucidated with reference to the embodiments described hereinafter.

In the drawings:
Fig. 1 shows a schematic block diagram of a conventional field or frame recursive noise reduction circuit;
Fig. 2 shows an exemplary noise reduction curve for use in a motion compensation circuit;
Fig. 3 shows a schematic block diagram of a first embodiment of the circuit arrangement of the subject invention;
Fig. 4 shows a second embodiment of a recursive noise reduction filter in accordance with the invention; and
Fig. 5 shows a transversal artifacts reduction filter in accordance with the invention;

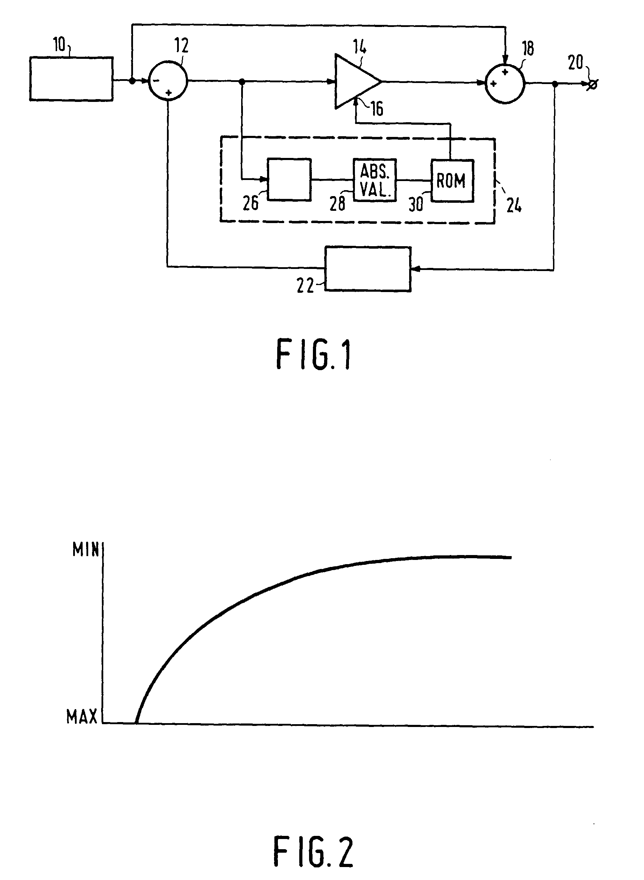

In Fig. 1, a conventional recursive noise reduction circuit is shown. After being processed in the receiving circuits 10 of a television receiver, the input video signals are applied to one input of a subtracting circuit 12. The output of the subtracting circuit 12 is applied to a variable gain amplifier 14 having a gain control input 16. The output of the variable gain amplifier 14 is then applied to one input of an adder 18, the input video signals being applied to the other input of the adder 18. The output of the adder 8 is connected to the output 20 of the recursive noise reduction circuit and also to a field (or frame) delay 22. The output of the delay 22 is then connected to the second input of the subtracting circuit 12.

The gain control input 16 of the variable gain amplifier 14 is connected to a motion compensation circuit 24 which includes a filter 26 also connected to the output of the subtracting circuit 12. An output of the filter 26 is connected to an absolute value forming circuit 28. The output from the absolute value forming circuit 28 is applied as an address signal to a ROM 30 having stored therein corresponding gain values. Fig. 2 shows a exemplary graph of gain values corresponding to the applied difference values which is stored in the ROM 30. The output of the ROM 30 is then applied to the gain control input 16.

The above recursive noise reduction is suitable for either frame or field noise reduction depending on the delay 22. In operation, the output of the delay 22 is compared with the input video signal in the subtracting circuit 12. The resultant difference value is then applied to the variable gain amplifier 14. The motion compensation circuit 24 then determines a motion signal to be applied to the gain control input 16 of the variable gain amplifier 14 based on the assumption that the greater the difference value, the more motion there is in the video signal. Therefore, less of the difference signal should be added to the input video signal in the adder 18 at the output of the variable gain amplifier 14.

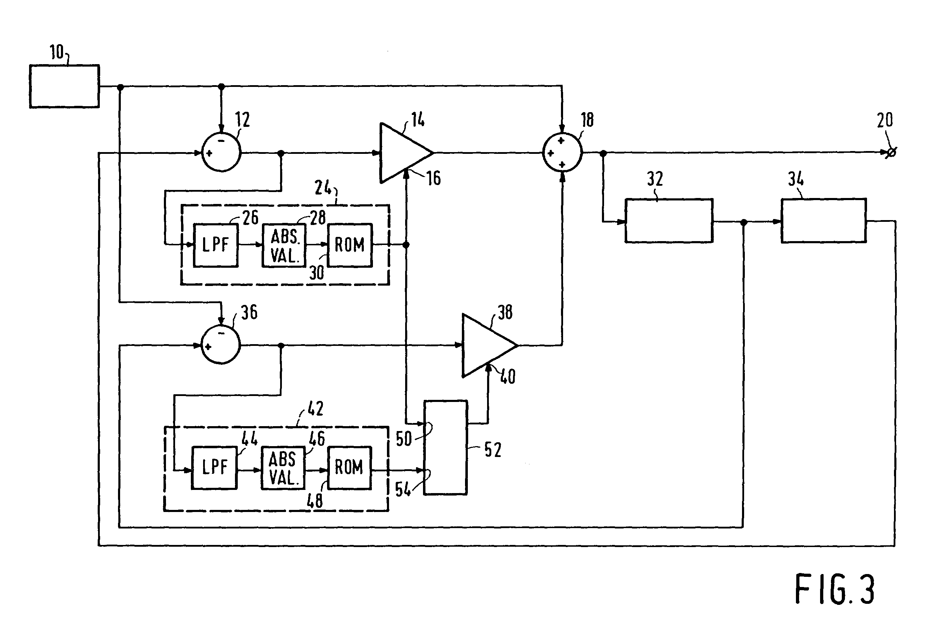

The circuit arrangement of a first embodiment of the subject invention is shown in Fig. 3. The same components as shown in Fig. 1 have the same reference numbers. The circuit arrangement of the subject embodiment includes a frame recursive noise reduction circuit as that shown in Fig. 1 and includes subtracting circuit 12, variable gain amplifier 14, adder 18 and motion compensation circuit 24. However, instead of a single delay 22 as shown in Fig. 1, the subject circuit arrangement includes the serial arrangement of two field delay circuits 32 and 34. The output of field delay circuit 34 is then connected to the second input of the subtracting circuit 12.

The circuit arrangement of the subject embodiment further includes a field recursive noise reduction circuit similar to that shown in Fig. 1. In particular, a second subtracting circuit 36 also has the input video signals applied to one of the inputs thereof. The output of the field delay circuit 32 is applied to the second input of the second subtracting circuit 36. The output of the second subtracting circuit 36 is applied to a input of a second variable gain amplifier 38 having a gain control input 40. The output from the variable gain amplifier 38 is applied to a third input of adder 18. A second motion compensation circuit 42 is also connected to the output of the second subtracting circuit 38 and includes a filter 44, a absolute value forming circuit 46 and an ROM 48. The output of the ROM 30 is also applied to a first input 50 of a comparator 52 while the output of the ROM 48 is applied to a second input 54 of the comparator 52. The comparator 52 is arranged such that if the value of the signal at the first input 50 is greater than or equal to the value of the signal at the second input 54, then the comparator 52 output is zero. Otherwise, the comparator 52 output is the difference between the values at the second and first inputs 54 and 50. The output of comparator 52 is then connected to the gain control input 40 of the variable gain amplifier 38.

In operation, the circuit arrangement of the subject embodiment is biased toward frame recursive noise reduction in the event of still or slow moving scenes in the input video signals. As such, the first motion signal will be larger than the second motion signal resulting in only frame noise reduction. As the motion increases in the scenes, the first motion signal drops to less than the second motion signal resulting in an increasing amount of field recursive noise reduction with a respective drop in frame recursive noise reduction. As motion continues, both field and frame recursive noise reductions are diminished.

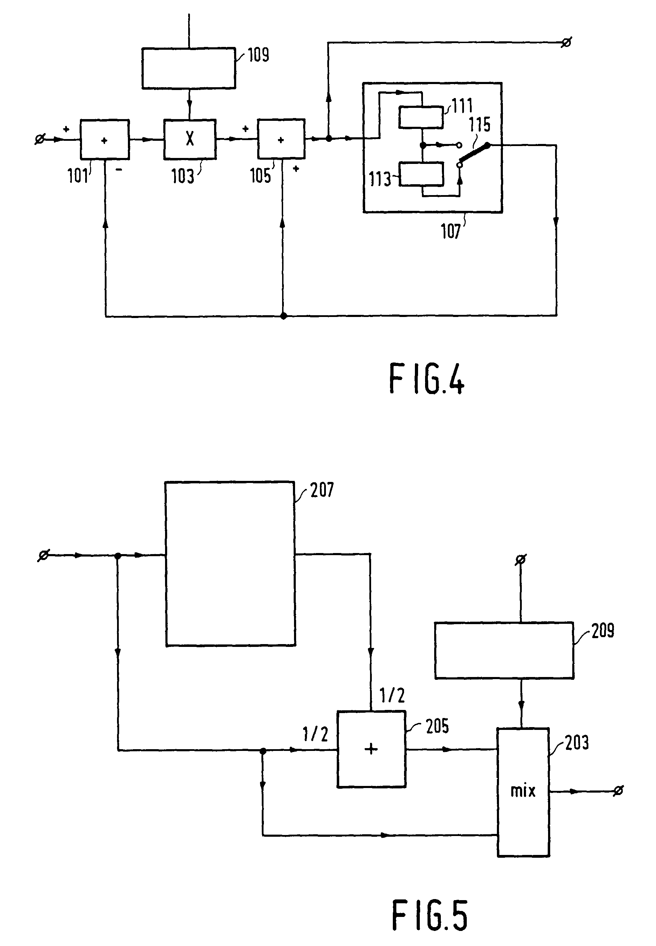

In the noise reduction arrangement of Fig. 4, a input television signal is applied to a non-inverting input of a subtracter 101 which at its inverting input receives a delayed television signal. An output of the subtracter 101 is coupled through a multiplier 103 to one input of an adder 105 which at its other input receives the delayed television signal. An output of the adder 105 furnishes the output signal of the recursive filter and is coupled to a delay arrangement 107 which furnishes the delayed television signal. The multiplier 103 receives from a control block 109 a weighting factor indicating how the input television signal and the delayed television signal are to be combined: if the weighting factor equals one, the delayed signal has no influence, while if the weighting factor equals zero, the input signal has no influence, and if the weighting factor equals one half, the input signal and the delayed signal have equal influence. Up till now, a conventional recursive noise reduction filter has been described.

In accordance with one aspect of the present invention, the noise reduction arrangement of Fig. 4 forms part of a television receiver capable of receiving an enhanced television signal, whereby the control block 109 receives motion information signals encoded with the enhanced television signal. For example, the input television signal is a European HD-MAC television signal. The television receiver may be an HD-MAC receiver; however, the television receiver may as well be a normal definition D2-MAC receiver. In any case, the control block 109 includes suitable means (for example, a read only memory) for obtaining the above-mentioned weighting factor from the motion information signals.

In accordance with another aspect of the present invention, the delay arrangement 107 comprises a series arrangement of two field delay circuits 111 and 113, and a switch 115 selecting the output of the field delay circuit 111 or that of the field delay circuit 113 in dependence upon the amount of motion indicated by the motion information signals.

Fig. 5 shows a transversal artifacts reduction filter in accordance with the invention. As shown in Fig. 4, a recursive filter can be used to great advantage to reduce noise in, for example, a D2-MAC receiver with the aid of the motion information signals encoded in the HD-MAC signal. This recursive filter will at the same time reduce artifacts caused by the HD-MAC encoding method to some extent. However, if the reduction of these encoding artifacts is deemed to be more important than the reduction of noise, applicants prefer to use a transversal filter rather than a recursive filter. A transversal filter offers maximum artifacts reduction at minimum smearing effects. An embodiment of such a transversal filter is shown in Fig. 5. The HD-MAC input television signal is applied to a first input of a mixer 203, to a first input of an averager 205 and through a frame delay 207 to a second input of the averager 205. An output of the averager 205 is coupled to a second input of the mixer 203. The mixer 203 is controlled by a control signal received from an ROM 209 to which the motion information signals of the HD-MAC input television signal are applied.

## Claims

1. An arrangement for reducing artifacts in television signals, comprising:
means (24, 42, 52; 109; 209) for obtaining motion information signals from said television signals;
means (32, 34; 107) for delaying said television signals by a field period and by a frame period, thereby creating field delayed television signals and frame delayed television signals;
means (12-18, 101-105; 203, 205) for combining said television signals and said frame delayed television signals in dependence upon said motion information signals; and characterized in that
said combining means (12-18, 36, 38; 101-105; 203, 205) are arranged for combining said television signals, said field delayed television signals and said frame delayed television signals in dependence upon said motion information signals.

2. An arrangement as claimed in claim 1, wherein said television signals comprise said motion information signals.

3. An arrangement as claimed in claim 2, wherein said television signals are high-definition television signals and said motion information signals are encoded in said high-definition television signals.

4. An arrangement as claimed in claim 1, wherein said combining means comprise a transversal filter (203, 205) for furnishing a television signal with reduced encoding artifacts.

5. An arrangement as claimed in claim 1, wherein said combining means comprise a recursive filter (12-18, 36, 38; 101-105) for furnishing a television signal with reduced noise artifacts.

6. An arrangement as claimed in claim 1, wherein said combining means comprise:
means (12-18) for performing a frame recursive noise reduction on said input video signals, comprising first means (12) for subtracting said television signals from said frame delayed television signals to form a first difference signal, means (14) coupled to said first subtracting means (12) for providing a portion of said first difference signal in dependence on a first motion signal applied to a control input (16) thereof, and combining means (18) for adding said portion of said first difference signal to said television signals thereby forming frame recursive noise reduced video signals;
means (24) for determining the first motion signal from said first difference signal at an output of said first subtracting means (12);
means (36, 38) for performing a field recursive noise reduction on said television signals, comprising second means (36) for subtracting said television signals from said field delayed television signals to form a second difference signal, means (38) coupled to said second subtracting means (36) for providing a portion of said second difference signal in dependence on a second motion signal applied to a control input (40) thereof, and means (18) for adding said portion of said second difference signal to said frame recursive noise reduced video signals;
means (42) for determining an intermediate motion signal from said second difference signal at an output of said second subtracting means (36); and
means (50) for determining the second motion signal by combining said intermediate motion signal with said first motion signal.

7. An apparatus as claimed in claim 6, wherein said means (24) for determining said first motion signal comprise:
means (26, 28) for filtering said first difference signal and for determining an absolute value thereof; and
means (30) for storing a noise reduction curve, having an input for receiving said absolute value of said filtered first difference signal and an output for providing said first motion signal.

8. An apparatus as claimed in claim 6, wherein said means (42) for determining said intermediate motion signal comprise:
means (44, 46) for filtering said second difference signal and for determining an absolute value thereof; and
means (48) for storing a noise reduction curve, having an input for receiving said absolute value of said filtered second difference signal and an output for providing said intermediate motion signal.

9. An apparatus as claimed in claim 6, wherein said means (50) for determining said second motion signal comprise:
means for subtracting said first motion signal from said intermediate motion signal thereby forming a resultant difference signal; and
means for setting said second motion signal equal to said resultant difference signal if said resultant difference signal is greater than zero, and for setting said second motion signal equal to zero if said resultant difference signal is less than or equal to zero.

## Patentansprüche

1. Anordnung zur Reduktion von Artefakten in Fernsehsignalen mit Mitteln (24, 42, 52; 109; 209) zum Erhalten von Bewegungsinformationssignalen von den genannten Fernsehsignalen;
Mitteln (32, 34; 107) zum Verzögern von Fernsehsignalen um eine Teilbildperiode und um eine Bildperiode, wobei dadurch teilbildverzögerte Fernsehsignale und bildverzögerte Fernsehsignale erzeugt werden;
Mitteln (12-18, 101-105; 203, 205) zum Kombinieren der genannten Signale und der genannten bildverzögerten Fernsehsignale abhängig von den genannten Bewegungsinformationssignalen; und dadurch gekennzeichnet, daß die genannten Kombiniermittel (12-18, 36, 38; 101-105; 203, 205) zum Kombinieren der genannten Fernsehsignale der genannten teilbildverzögerten Fernsehsignale und der genannten bildverzögerten Fernsehsignale abhängig von den genannten Bewegungsinformationssignalen vorgesehen sind.

2. Schaltungsanordnung nach Anspruch 1, wobei die genannten Fernsehsignale die genannten Bewegungsinformationssignale aufweisen.

3. Schaltungsanordnung nach Anspruch 2, wobei die genannten Fernsehsignale Hochauflösungsfernsehsignale sind und die genannten Bewegungsinformationssignale in den genannten Hochauflösungsfernsehsignalen codiert sind.

4. Schaltungsanordnung nach Anspruch 1, wobei die genannten Kombiniermittel ein transversales Filter (203, 205) aufweisen zum Liefern eines Fernsehsignals mit reduzierten codierten Artefakten.

5. Schaltungsanordnung nach Anspruch 1, wobei die genannten Kombiniermittel ein rekursives Filter (12-18, 36, 38; 101-105) aufweisen zum Liefern eines Fernsehsignals mit reduzierten Störungsartefakten.

6. Schaltungsanordnung nach Anspruch 1, wobei die genannten Kombiniermittel die nachfolgenden Elemente aufweisen:
Mittel (12-18) zum Durchführen einer bildrekursiven Störungsreduktion an den genannten Eingangsvideosignalen, mit ersten Mitteln (12) zum Subtrahieren der genannten Fernsehsignalen von den genannten bildverzögerten Fernsehsignalen zum Bilden eines ersten Differenzsignals,
Mittel (14), die mit den genanntenersten Subtrahiermitteln (12) gekoppelt sind zum Schaffen eines Teils des genannten ersten Differenzsignals abhängig von einem ersten Bewegungssignals, das einem Regeleingang (16) zugeführt wird, und Kombiniermittel (18) zum Addieren des genannten Teils des genannten ersten Differenzsignals zu den genannten Fernsehsignalen, wobei bildrekursive störungsreduzierte Videosignale gebildet werden,
Mittel (24) zum bestimmendes ersten Bewegungssignals aus dem genannten ersten Differenzsignal und einem Ausgangssignal der genannten ersten Subtrahiermitteln (12);
Mittel (36, 38) zum Durchführen einer teilbildreduzierten Störungsreduktion der genannten Fernsehsignale, mit zweiten Mitteln (36) zum Subtrahieren der genannten Fernsehsignale von den gennanten teilbildverzögerten Fernsehsignalen zum Bilden eines zweiten Differenzsignals, Mitteln (38), die mit den genannten zweiten Subtrahiermitteln (36) gekoppelt sind zum Schaffen eines Teils des genannten zweiten Differenzsignals abhängig von dem zweiten Bewegungssignal, das einem Regeleingang (40) zugeführt wird, und Mitteln (18) zum Addieren des genannten Teils des genannten zweiten Differenzsignals zu den genannten bildrekursiven störungsreduzierten Videosignalen;
Mittel (42) zum Bestimmen eines Zwischenbewegungssignals aus dem genannten zweiten Differenzsignal an einem Ausgang der genannten zweiten Subtrahiermitteln (36); und
Mittel (50) zum Bestimmen des zweiten Bewegungssignals durch Kombination des genannten Zwischenbewegungssignals mit dem genannten ersten Bewegungssignals.

7. Gerät nach Anspruch 6 wobei die genannten Mittel (24) zum Bestimmen des genannten ersten Bewegungssignals die nachfolgenden Elemente aufweisen:
Mittel (26, 28) zum Filtern des genannten ersten Differenzsignals und zum Bestimmen eines Absolutwertes desselben; und
Mittel (30) zum Speichern einer Störungsreduktionskurve mit einem Eingang zum Empfangen des genannten Absolutwertes des genannten gefilterten ersten Diffrenzsignalsund einem Ausgang zum Liefern des genannten ersten Bewegungssignals.

8. Gerät nach Anspruch 6, wobei die genannten Mittel (42) zum Bestimmen des genannten Zwischenbewegungssignals die nachfolgenden Elemente aufweisen:
Mittel (44, 46) zum Filtern des genannten zweiten Differenzsignals und zum Bestimmen eines Absolutwertes desselben; und
Mittel (48) zum Speichern einer Störungsreduktionskurve mit einem Eingang zum Empfangen des genannten Absolutwertes des genannten gefilterten zweiten Differenzsignals und einem Ausgang zum Schaffen des genannten Zwischenbewegungssignals.

9. Gerät nach Anspruch 6, eobei die genannten Mittel (50) zum Bestimmen des genannten zweiten Bewegungssignals die nachfolgenden Elemente aufweisen:
Mittel zum Subtrahieren des genannten ersten Bewegungssignals von dem genannten Zwischenbewegungssignal, wobei ein resultierendes Differenzsignal gebildet wird; und
Mittel zum Feststellen des genannten zweiten Bewegungssignals gleich dem resultierenden Differenzsignal, wenn das genannte resultierende Differenzsignal größer ist als Null, und zum Festsetzten des genannten zweiten Bewegungssignals gleich Null, wenn das genannte resultierende Differenzsignal kleiner ist als Null oder gleich Null ist.

## Revendications

1. Dispositif de réduction d'artefacts dans des signaux de télévision, comprenant :
des moyens (24, 42, 52; 109; 209) pour obtenir des signaux d'information de mouvement à partir desdits signaux de télévision;
des moyens (32, 34; 107) pour retarder lesdits signaux de télévision d'une période de trame et d'une période d'image, créant ainsi des signaux de télévision retardés trame et des signaux de télévision retardés image;
des moyens (12-18, 101-105; 203, 205) pour combiner lesdits signaux de télévision et lesdits signaux de télévision retardés image en fonction desdits signaux d'information de mouvement; et caractérisé en ce que
lesdits moyens de combinaison (12-18, 36, 38; 101-105; 203, 205) sont prévus pour combiner lesdits signaux de télévision, lesdits signaux de télévision retardés trame et lesdits de télévision retardés image en fonction desdits signaux d'information de mouvement.

2. Dispositif suivant la revendication 1, dans lequel lesdits signaux de télévision comprennent lesdits signaux d'information de mouvement.

3. Dispositif suivant la revendication 2, dans lequel lesdits signaux de télévision sont des signaux de télévision à haute définition et lesdits signaux d'information de mouvement sont codés dans lesdits signaux de télévision à haute définition.

4. Dispositif suivant la revendication 1, dans lequel lesdits moyens de combinaison comprennent un filtre transversal (203, 205) pour fournir un signal de télévision présentant des artefacts de codage réduits.

5. Dispositif suivant la revendication 1, dans lequel lesdits moyens de combinaison comprennent un filtre récursif (12-18, 36, 38; 101-105) pour fournir un signal de télévision présentant des artefacts de bruit réduits.

6. Dispositif suivant la revendication 1, dans lequel lesdits moyens de combinaison comprennent :
des moyens (12-18) pour effectuer une réduction de bruit récursive image sur lesdits signaux vidéo d'entrée, comprenant un premier moyen (12) pour soustraire lesdits signaux de télévision desdits signaux de télévision retardés image afin de former un premier signal de différence, un moyen (14) couplé audit premier moyen soustracteur (12) pour délivrer une partie dudit premier signal de différence en fonction d'un premier signal de mouvement appliqué à une entrée de commande (16) de ce moyen, et un moyen de combinaison (18) pour additionner ladite partie dudit premier signal de différence auxdits signaux de télévision, de manière à former des signaux vidéo à réduction de bruit récursif image;
des moyens (24) pour déterminer le premier signal de mouvement à partir dudit premier signal de différence à une sortie dudit premier moyen soustracteur (12);
des moyens (36, 38) pour effectuer une réduction de bruit récursive trame sur lesdits signaux de télévision, comprenant un deuxième moyen (36) pour soustraire lesdits signaux de télévision desdits signaux de télévision retardés trame afin de former un deuxième signal de différence, un moyen (38) couplé audit deuxième moyen soustracteur (36) pour délivrer une partie dudit deuxième signal de différence en fonction d'un deuxième signal de mouvement appliqué à une entrée de commande (40) de ce moyen, et un moyen (18) pour additionner ladite partie dudit deuxième signal de différence auxdits signaux vidéo à réduction de bruit récursive image;
des moyens (42) pour déterminer un signal de mouvement intermédiaire à partir dudit deuxième signal de différence à une sortie dudit deuxième moyen soustracteur (36), et
des moyens (50) pour déterminer le deuxième signal de mouvement en combinant ledit signal de mouvement intermédiaire audit premier signal de mouvement.

7. Appareil suivant la revendication 6, dans lequel lesdits moyens (24) destinés à déterminer ledit premier signal de mouvement comprennent :
des moyens (26, 28) pour filtrer ledit premier signal de différence et pour déterminer une valeur absolue de ce dernier, et
des moyens (30) pour stocker une courbe de réduction de bruit, comportant une entrée pour recevoir ladite valeur absolue dudit premier signal de différence filtré et une sortie pour délivrer ledit premier signal de mouvement.

8. Appareil suivant la revendication 6, dans lequel lesdits moyens (42) destinés à déterminer ledit signal de mouvement intermédiaire comprennent :
des moyens (44, 46) pour filtrer ledit deuxième signal de différence et pour déterminer une valeur absolue de ce dernier, et
des moyens (48) pour stocker une courbe de réduction de bruit, comportant une entrée pour recevoir ladite valeur absolue dudit deuxième signal de différence filtré et une sortie pour délivrer ledit signal de mouvement intermédiaire.

9. Appareil suivant la revendication 6, dans lequel lesdits moyens (50) destinés à déterminer ledit deuxième signal de mouvement comprennent :
des moyens pour soustraire ledit premier signal de mouvement dudit signal de mouvement intermédiaire, formant ainsi un signal de différence résultant, et
des moyens pour égaliser ledit deuxième signal de mouvement audit signal de différence résultant si ledit signal de différence résultant est supérieur à zéro et pour égaliser ledit deuxième signal de mouvement à zéro si ledit signal de différence résultant est inférieur ou égal à zéro.
